# EUROPEAN PATENT APPLICATION

(11) **EP 3 786 774 A1**
(43) Date of publication of application: **03.03.2021**
(21) Application number: 20192686.2
(22) Date of filing: 25.08.2020
(51) Int. Cl.: G06F 3/0488, G06F 3/0485

(54) **OPERATION INPUT DEVICE CAPABLE OF ADJUSTING SCROLL AMOUNT, IMAGE PROCESSING APPARATUS, OPERATION INPUT METHOD**

(30) Priority: 30.08.2019 JP 2019157708
(71) Applicant: KYOCERA Document Solutions Inc., Osaka-shi, Osaka 540-8585 (JP)
(72) Inventor: FURUTANI, Hiroshi, Osaka-shi, Osaka 540-8585 (JP)
(74) Representative: Plougmann Vingtoft a/s

(57) **Abstract**

An operation input device includes a display portion (61), a display control portion (81), and a scroll amount control portion (82). The display control portion (81) scrolls an image displayed on the display portion (61) in response to a slide operation performed on a display surface of the display portion (61). The scroll amount control portion (82) changes a scroll amount for slide operation when a first slide operation has been performed by a predetermined number of times continuously in a same direction, the first slide operation being a slide operation for which the image is scrolled by an amount that is higher than a predetermined upper limit value or equal to or lower than a predetermined lower limit value.

## Description

### BACKGROUND

The present disclosure relates to an operation input device, an image processing apparatus, and an operation input method.

There is known an image processing apparatus, such as a multifunction peripheral, that includes a display portion including a touch panel. In this type of image processing apparatus, an image displayed on the display portion may be scrolled in response to a slide operation, such as a flick operation, performed on a display surface of the display portion.

### SUMMARY

An operation input device according to an aspect of the present disclosure includes a display portion, a display control portion, and a scroll amount control portion. The display control portion scrolls an image displayed on the display portion in response to a slide operation performed on a display surface of the display portion. The scroll amount control portion changes a scroll amount for slide operation when a first slide operation has been performed by a predetermined number of times continuously in a same direction, the first slide operation being a slide operation for which the image is scrolled by an amount that is higher than a predetermined upper limit value or equal to or lower than a predetermined lower limit value.

An image processing apparatus according to another aspect of the present disclosure includes the operation input device and either or both of an image reading portion and an image forming portion. The image reading portion is configured to read image data from a document sheet. The image forming portion is configured to form an image based on image data.

An operation input method according to a further aspect of the present disclosure is executed in an operation input device that includes a display portion. The operation input method includes: scrolling an image displayed on the display portion in response to a slide operation performed on a display surface of the display portion; and changing a scroll amount for slide operation when a first slide operation has been performed by a predetermined number of times continuously in a same direction, the first slide operation being a slide operation for which the image is scrolled by an amount that is higher than a predetermined upper limit value or equal to or lower than a predetermined lower limit value.

This Summary is provided to introduce a selection of concepts in a simplified form that are further described below in the Detailed Description with reference where appropriate to the accompanying drawings. This Summary is not intended to identify key features or essential features of the claimed subject matter, nor is it intended to be used to limit the scope of the claimed subject matter. Furthermore, the claimed subject matter is not limited to implementations that solve any or all disadvantages noted in any part of this disclosure.

### BRIEF DESCRIPTION OF THE DRAWINGS

FIG. 1 is a diagram showing a configuration of an image processing apparatus according to an embodiment of the present disclosure.
FIG. 2 is a block diagram showing a system configuration of the image processing apparatus according to the embodiment of the present disclosure.
FIG. 3 is a diagram showing a configuration of an operation/display portion of the image processing apparatus according to the embodiment of the present disclosure.
FIG. 4 is a diagram showing an example of a list displayed on the image processing apparatus according to the embodiment of the present disclosure.
FIG. 5 is a diagram showing an example of a list displayed on the image processing apparatus according to the embodiment of the present disclosure.
FIG. 6 is a diagram showing an example of a list displayed on the image processing apparatus according to the embodiment of the present disclosure.
FIG. 7 is a diagram showing an example of a simple list displayed on the image processing apparatus according to the embodiment of the present disclosure.
FIG. 8 is a diagram showing an example of a simple list displayed on the image processing apparatus according to the embodiment of the present disclosure.
FIG. 9 is a diagram showing an example of an expanded list displayed on the image processing apparatus according to the embodiment of the present disclosure.
FIG. 10 is a flowchart showing an example of a display control process executed in the image processing apparatus according to the embodiment of the present disclosure.
FIG. 11 is a flowchart showing an example of a first scroll amount changing process executed in the image processing apparatus according to the embodiment of the present disclosure.
FIG. 12 is a flowchart showing an example of a second scroll amount changing process executed in the image processing apparatus according to the embodiment of the present disclosure.

### DETAILED DESCRIPTION

The following describes an embodiment of the present disclosure with reference to the accompanying drawings. It should be noted that the following embodiment is an example of a specific embodiment of the present disclosure and should not limit the technical scope of the present disclosure.

### [Configuration of image processing apparatus 10]

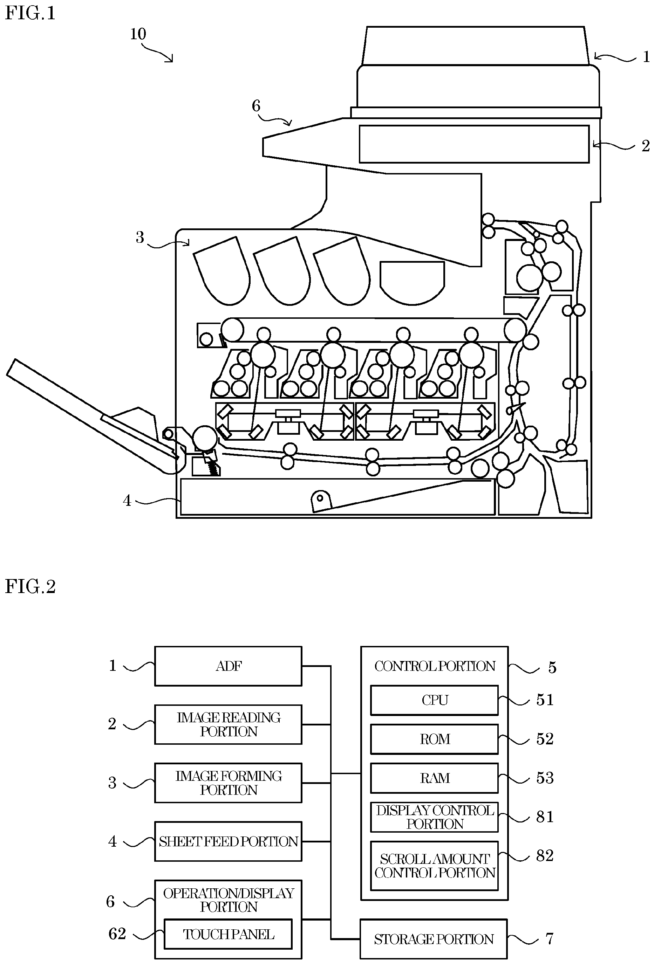

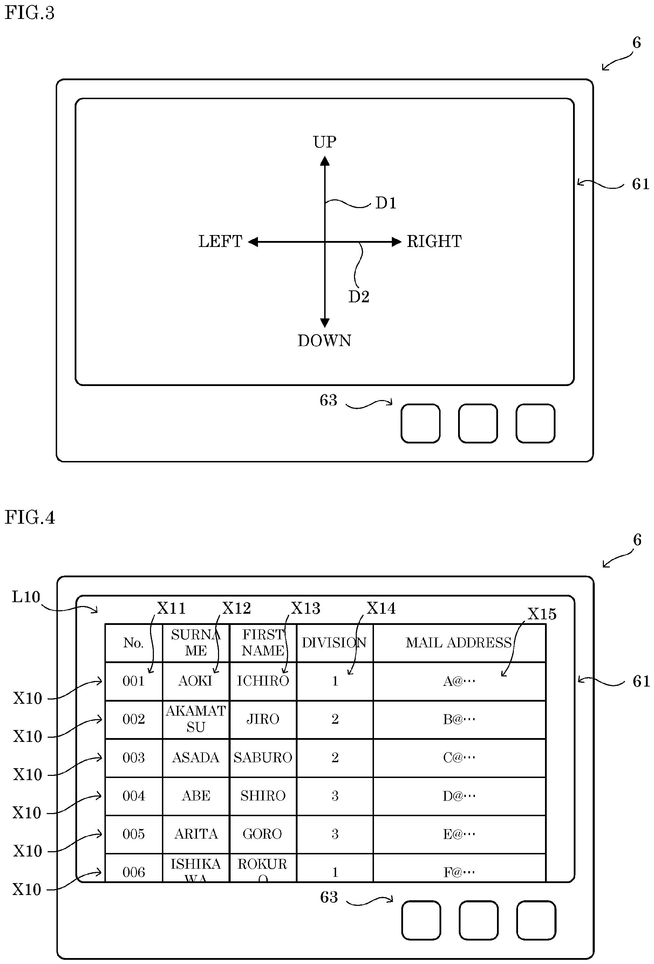

First, a configuration of an image processing apparatus 10 according to the embodiment of the present disclosure is described with reference to FIG. 1 to FIG. 3. Here, FIG. 1 is a cross-sectional diagram showing a configuration of the image processing apparatus 10. In addition, FIG. 3 is a plan diagram showing a configuration of an operation/display portion 6.

The image processing apparatus 10 is a multifunction peripheral having a plurality of functions such as a scan function for reading image data from a document sheet, a print function for forming an image based on image data, a facsimile function, and a copy function. It is noted that the image processing apparatus 10 may be a scanner, a printer, a facsimile device, a copier, a personal computer, a notebook computer, a smartphone, or a tablet terminal.

As shown in FIG. 1 and FIG. 2, the image processing apparatus 10 includes an ADF 1, an image reading portion 2, an image forming portion 3, a sheet feed portion 4, a control portion 5, the operation/display portion 6, and a storage portion 7.

The ADF 1 conveys a document sheet so that it is read by the image reading portion 2. The ADF 1 includes a document sheet setting portion, a plurality of conveyance rollers, a document sheet pressing, and a sheet discharge portion.

The image reading portion 2 is configured to read image data from a document sheet. The image reading portion 2 includes a document sheet table, a light source, a plurality of mirrors, an optical lens, and a CCD.

The image forming portion 3 is configured to selectively form a color image or a monochrome image on a sheet by an electrophotographic method based on image data. The image forming portion 3 includes: a plurality of image forming units corresponding to C (cyan), M (magenta), Y (yellow), and K (black); a laser scanning unit (LSU); an intermediate transfer belt; a secondary transfer roller; a fixing device; and a sheet discharge tray. It is noted that the image forming portion 3 may form an image by another image forming method such as an inkjet method.

The sheet feed portion 4 supplies sheets one by one to the image forming portion 3. The sheet feed portion 4 includes a sheet feed cassette, a manual feed tray, and a plurality of conveyance rollers.

The control portion 5 comprehensively controls the image processing apparatus 10. As shown in FIG. 2, the control portion 5 includes a CPU 51, a ROM 52, and a RAM 53.

The CPU 51 is a processor that executes various calculation processes. The ROM 52 is a nonvolatile storage device in which various information such as control programs for causing the CPU 51 to execute various processes are preliminarily stored. The RAM 53 is a volatile storage device that is used as a temporary storage memory (working area) for the various processes executed by the CPU 51. In the control portion 5, the CPU 51 executes the various control programs stored in advance in the ROM 52. This allows the image processing apparatus 10 to be controlled comprehensively by the control portion 5. It is noted that the control portion 5 may be formed as an electronic circuit such as an integrated circuit (ASIC). In addition, the control portion 5 may be a control portion provided independently of a main control portion that comprehensively controls the image processing apparatus 10.

The operation/display portion 6 is a user interface of the image processing apparatus 10. As shown in FIG. 2 and FIG. 3, the operation/display portion 6 includes a display portion 61, a touch panel 62, and hard keys 63.

The display portion 61 displays various types of information in response to control instructions from the control portion 5. For example, the display portion is a liquid crystal display.

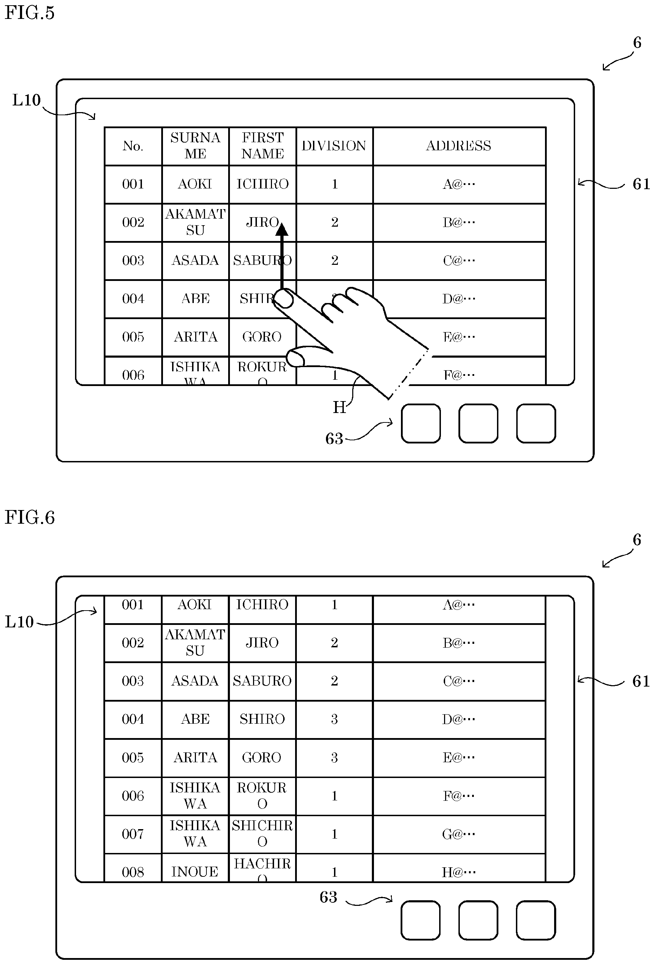

The touch panel 62 is configured to detect an operation of a user performed on the display portion 61. For example, when an object H (see FIG. 5) such as a user's finger contacts the display portion 61, the touch panel 62 detects a contact position (touch position) of the object H on the display portion 61 by a resistance film method. It is noted that the touch panel 62 may detect a contact of the object H to the display portion 61 by another detection method such as an electrostatic capacity method.

The hard keys 63 are configured to input various types of information to the control portion 5 in response to user operations. For example, the hard keys 63 include: a power source key that is used to control the power supply to the components of the image processing apparatus 10; and a start key that is used to instruct the execution of various types of jobs.

The storage portion 7 is a nonvolatile storage device. For example, the storage portion 7 is a storage device such as: a nonvolatile memory such as a flash memory or an EEPROM; an SSD (Solid State Drive); or an HDD (Hard Disk Drive).

### [Configuration of control portion 5]

Next, the configuration of the control portion 5 is described in detail with reference to FIG. 2 to FIG. 6. Here, FIG. 4 is a diagram showing a part of a list L10 displayed on the display portion 61. In addition, FIG. 5 and FIG. 6 are diagrams showing examples of scrolling a part of the list L10 displayed on the display portion 61.

As shown in FIG. 2, the control portion 5 includes a display control portion 81, and a scroll amount control portion 82. Here, a device including the control portion 5 and the operation/display portion 6 is an example of an operation input device of the present disclosure.

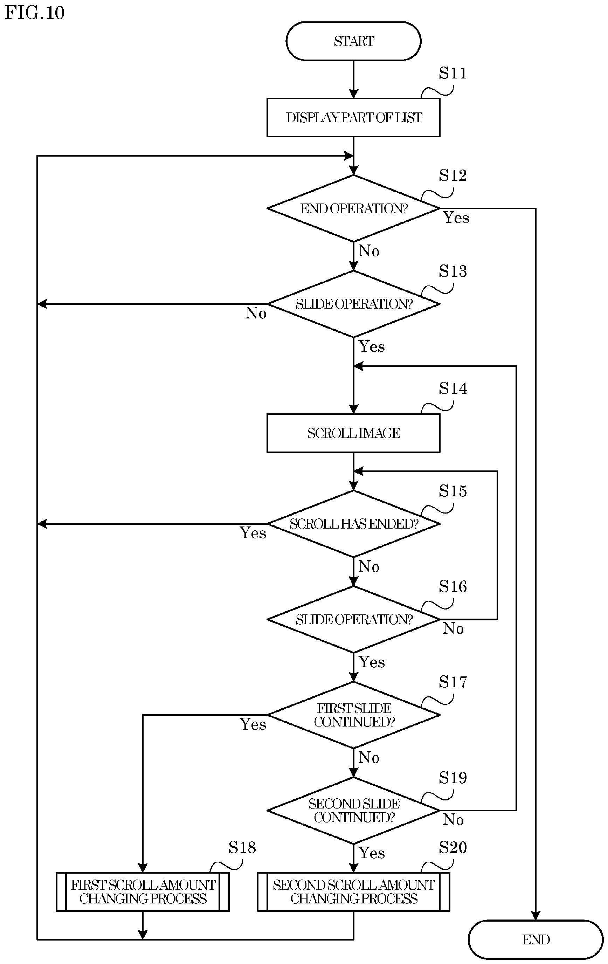

Specifically, a display control program for causing the CPU 51 of the control portion 5 to execute a display control process (see the flowchart of FIG. 10) that is described below is preliminarily stored in the ROM 52 of the control portion 5. The CPU 51 of the control portion 5 executes the display control program stored in the ROM 52. This allows the control portion 5 to function as the display control portion 81 and the scroll amount control portion 82. It is noted that the display control program may be recorded on a computer-readable recording medium such as a CD, a DVD, or a flash memory, and may be installed from the recording medium to a nonvolatile storage device provided in the image processing apparatus 10.

The display control portion 81 displays a part of a display target on the display portion 61.

For example, the display target is the list L10 (see FIG. 4) that is a list of registered address information X10 preliminarily registered in the image processing apparatus 10. As shown in FIG. 4, in the list L10, a plurality of pieces of registered address information X10 are arranged in alignment in an up-down direction D1 (see FIG. 3) of the display portion 61.

Each piece of registered address information X10 is composed of first item information X11, second item information X12, third item information X13, fourth item information X14, and fifth item information X15. The first item information X11 indicates a position in the alignment order in the list L10. The second item information X12 indicates a surname of a person whose mail address is registered in the image processing apparatus 10. The third item information X13 indicates a first name of the person whose mail address is registered in the image processing apparatus 10. The fourth item information X14 indicates a division to which the person whose mail address is registered in the image processing apparatus 10 belongs. The fifth item information X15 indicates the registered mail address. In the list L10, a plurality of pieces of registered address information X10 are arranged in alignment in the order of the Japanese syllabary of the second item information X12, namely, the surname information.

For example, when the user has performed an operation on the operation/display portion 6 to instruct a display of the list L10, the display control portion 81 generates first screen data that represents a part of the list L10, and displays the first screen data on the display portion 61.

For example, in the image processing apparatus 10, a plurality of pieces of registered address information X10 are stored in the storage portion 7. In addition, the storage portion 7 stores first shape data that represents the shape of the list L10. The display control portion 81 generates the first screen data based on the registered address information X10 and the first shape data stored in the storage portion 7.

In addition, the display control portion 81 scrolls an image, namely a part of the list L10, displayed on the display portion 61 in response to a slide operation performed in the up-down direction D1 on the display surface of the display portion 61.

Here, in the slide operation, the object H is made contact with the display surface of the display portion 61, and the object H is moved on the display surface while being in contact with the display surface. What is called a swipe operation or a flick operation corresponds to the slide operation.

Specifically, when the touch panel 62 has detected a slide operation, the display control portion 81 acquires information relating to the moving direction, the moving distance, and the moving speed of the object H in the slide operation. Subsequently, the display control portion 81 scrolls, based on the acquired information, a part of the list L10 displayed on the display portion 61.

For example, when the slide operation has been performed in the upward direction on the display surface of the display portion 61 (see FIG. 5), the display control portion 81 scrolls, in the upward direction, a part of the list L10 displayed on the display portion 61 (see FIG. 6).

Here, in a case where the object H is not separated from the display surface of the display portion 61 at the end of the slide operation, the display control portion 81 scrolls the part of the list L10 by the same distance as the moving distance of the object H in the slide operation. In this case, the display control portion 81 scrolls the part of the list L10 at the same speed as the moving speed of the object H in the slide operation.

On the other hand, in a case where the object H is separated from the display surface of the display portion 61 at the end of the slide operation, the display control portion 81, after scrolling the part of the list L10 by the same distance as the moving distance of the object H in the slide operation, inertiascrolls the part of the list L10. Specifically, the display control portion 81 inertiascrolls the list L10 by a distance that corresponds to the moving speed of the object H in the slide operation. In this case, the display control portion 81 scrolls the list L10 at the same speed as the moving speed of the object H in the slide operation before the inertia scroll, and gradually reduces the scroll speed during the inertia scroll.

Meanwhile, when the user searches for a desired piece of information by scrolling an image displayed on the display portion 61, the user may feel that a scroll amount for slide operation (a distance by which the image is scrolled in response to a slide operation) is excessively large or small. The problem taken into consideration, the scroll amount for slide operation may be changed when a predetermined operation has been performed on the display surface of the display portion 61. However, in a case where the predetermined operation is a single operation performed on the display surface of the display portion 61, the user may not perform the predetermined operation appropriately, and the scroll amount for slide operation may be changed in a manner not intended by the user.

On the other hand, in the image processing apparatus 10 according to the embodiment of the present disclosure, as described below, it is possible to prevent the scroll amount for slide operation from being changed in a manner not intended by the user.

When a first slide operation has been performed by a predetermined number of times continuously in a same direction, the scroll amount control portion 82 increases the scroll amount for slide operation, wherein the first slide operation is a slide operation for which an image displayed on the display portion 61 is scrolled by an amount that is higher than a predetermined upper limit value.

Specifically, when the first slide operation has been performed twice continuously in the upward or downward direction, the scroll amount control portion 82 increases the scroll amount for slide operation twice.

For example, when another first slide operation is performed while an image is being scrolled in response to a first slide operation performed immediately before, the scroll amount control portion 82 determines that the first slide operation has been performed continuously. It is noted that when another first slide operation is performed before a predetermined time period passes after an end of scrolling an image in response to a first slide operation performed immediately before, the scroll amount control portion 82 may determine that the first slide operation has been performed continuously.

It is noted that the upper limit value may be set in an arbitrary manner by an operation of the user performed on the operation/display portion 6. In addition, the predetermined number of times may be three times or more. In addition, when the first slide operation has been performed by a predetermined number of times continuously in any direction along the display surface of the display portion 61, the scroll amount control portion 82 may increase the scroll amount for slide operation. In addition, the increase amount or the increase rate of the scroll amount for slide operation may be set in an arbitrary manner by an operation of the user performed on the operation/display portion 6. In addition, the scroll amount control portion 82 may change the increase amount or the increase rate of the scroll amount for slide operation in correspondence with the number of times by which the first slide operation has been performed continuously in a same direction. For example, the scroll amount control portion 82 may increase the scroll amount for slide operation N (N is an integer) times, when the first slide operation has been performed N times continuously in a same direction.

In addition, when a second slide operation has been performed by a predetermined number of times continuously in a same direction, the scroll amount control portion 82 decreases the scroll amount for slide operation, wherein the second slide operation is a slide operation for which an image displayed on the display portion 61 is scrolled by an amount that is equal to or lower than a predetermined lower limit value. Here, the lower limit value is equal to or lower than the upper limit value.

Specifically, when the second slide operation has been performed twice continuously in the upward or downward direction, the scroll amount control portion 82 decreases the scroll amount for slide operation to half.

For example, when another second slide operation is performed while an image is being scrolled in response to a second slide operation performed immediately before, the scroll amount control portion 82 determines that the second slide operation has been performed continuously. It is noted that when another second slide operation is performed before a predetermined time period passes after an end of scrolling an image in response to a second slide operation performed immediately before, the scroll amount control portion 82 may determine that the second slide operation has been performed continuously.

It is noted that the lower limit value may be set in an arbitrary manner by an operation of the user performed on the operation/display portion 6. In addition, when the second slide operation has been performed by a predetermined number of times continuously in any direction along the display surface of the display portion 61, the scroll amount control portion 82 may decrease the scroll amount for slide operation. In addition, the decrease amount or the decrease rate of the scroll amount for slide operation may be set in an arbitrary manner by an operation of the user performed on the operation/display portion 6. In addition, the scroll amount control portion 82 may change the decrease amount or the decrease rate of the scroll amount for slide operation in correspondence with the number of times by which the second slide operation has been performed continuously in a same direction. For example, the scroll amount control portion 82 may decrease the scroll amount for slide operation to one Nth (N is an integer), when the second slide operation has been performed N times continuously in a same direction.

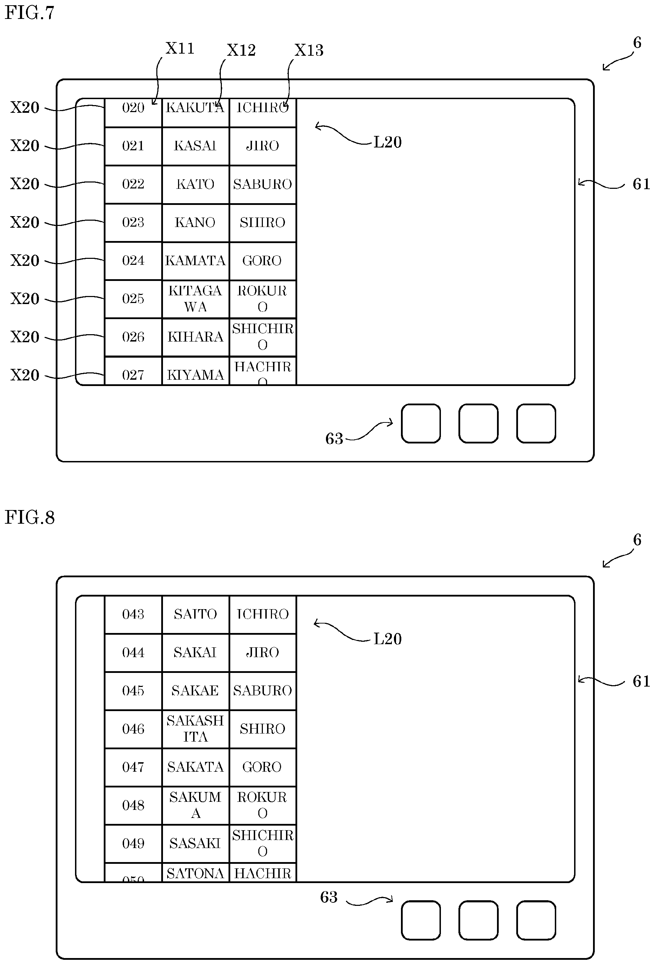

Here, when the scroll amount for slide operation has been increased, the display control portion 81 changes the image displayed on the display portion 61 from a part of the list L10 to a part of a simple list L20 (see FIG. 7) that is a simplified version of the list L10.

As shown in FIG. 7, the simple list L20 is an image of a list of simple address information X20 that is generated by omitting a part of the registered address information X10. Each piece of the simple address information X20 is composed of the first item information X11, the second item information X12, and the third item information X13. In other words, the simple address information X20 does not include the fourth item information X14 and the fifth item information X15.

For example, the display control portion 81 generates second screen data that represents a part of the simple list L20, and displays the second screen data on the display portion 61.

For example, the storage portion 7 stores second shape data that represents the shape of the simple list L20. The display control portion 81 generates the second screen data based on the registered address information X10 and the second shape data stored in the storage portion 7.

In addition, when the scroll amount for slide operation has been increased with the first slide operation in the upward direction, the display control portion 81 scrolls the image displayed on the display portion 61 until a piece of second item information X12 whose initial includes a consonant that precedes a consonant of the initial of the currently displayed piece of second item information X12 in the order of the Japanese syllabary, is displayed. In this case, desirably, the display control portion 81 scrolls the image as fast as possible.

In addition, when the scroll amount for slide operation has been increased with the first slide operation in the downward direction, the display control portion 81 scrolls the image displayed on the display portion 61 until a piece of second item information X12 whose initial includes a consonant that follows a consonant of the initial of the currently displayed piece of second item information X12 in the order of the Japanese syllabary, is displayed. In this case, desirably, the display control portion 81 scrolls the image as fast as possible.

For example, when the first slide operation is performed in the downward direction on the operation/display portion 6 that is in a state shown in FIG. 7, the display control portion 81 scrolls the image displayed on the display portion 61 until a piece of second item information X12 whose initial includes a consonant "sa" that follows a consonant "ka" of the initial of the currently displayed piece of second item information X12 in the order of the Japanese syllabary, is displayed (see FIG. 8).

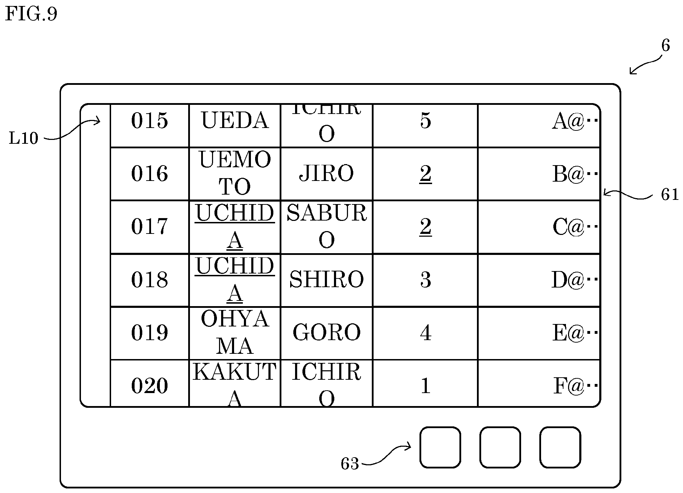

In addition, when the scroll amount for slide operation has been decreased, the display control portion 81 expands the display size of the part of the list L10 as shown in FIG. 9. For example, the display control portion 81 expands the display size of the part of the list L10 by a predetermined expansion ratio.

In addition, when the scroll amount for slide operation has been decreased, the display control portion 81 highlights a plurality of pieces of information that have the same content in the list L10. For example, the display control portion 81 changes the display color of the plurality of pieces of information having the same content in the list L10 to a predetermined color. It is noted that the method of highlighting is not limited to changing the display color, but may be showing the characters in the information in italic type or bold type, or adding an underline to the characters. It is noted that in FIG. 9, an underline is added in the highlighted information.

In a case where a predetermined specific condition is satisfied after the scroll amount for slide operation has been changed, the scroll amount control portion 82 returns the scroll amount for slide operation to the original amount.

For example, the specific condition is that either a first condition or a second condition described in the following is satisfied. The first condition is that the image scrolling stops. The second condition is that the slide operation is performed in a direction opposite to a direction in which the first slide operation or the second slide operation was performed by a plurality of times as a trigger to change the scroll. It is noted that the specific condition may be different from the conditions described above.

In a case where the scroll amount for slide operation is returned to the original amount by the scroll amount control portion 82 after the scroll amount for slide operation has been increased, the display control portion 81 changes the image displayed on the display portion 61 from a part of the simple list L20 to a part of the list L10.

In a case where the scroll amount for slide operation is returned to the original amount by the scroll amount control portion 82 after the scroll amount for slide operation has been decreased, the display control portion 81 returns the display size of the list L10 to the original size, and ends highlighting the plurality of pieces of information having the same content.

It is noted that when the first slide operation has been performed by the predetermined number of times continuously in a same direction, the scroll amount control portion 82 may not increase the scroll amount for slide operation. In this case, the second slide operation is another example of the first slide operation of the present disclosure. In addition, when the second slide operation has been performed by the predetermined number of times continuously in a same direction, the scroll amount control portion 82 may not decrease the scroll amount for slide operation.

In addition, when the scroll amount for slide operation has been increased, the display control portion 81 may not change the image displayed on the display portion 61 to the simple list L20. In addition, when the scroll amount for slide operation has been increased, the display control portion 81 may not scroll the image displayed on the display portion 61 until a piece of second item information X12 whose initial includes a consonant that precedes or follows a consonant of the initial of the currently displayed piece of second item information X12 in the order of the Japanese syllabary, is displayed.

In addition, when the scroll amount for slide operation has been decreased, the display control portion 81 may not expand the display size of the image. In addition, when the scroll amount for slide operation has been decreased, the display control portion 81 may not highlight a plurality of pieces of information that have the same content in the list L10.

In addition, the scroll amount control portion 82 may not return the scroll amount for slide operation to the original amount while the list L10 or the simple list L20 is displayed.

In addition, the display target is not limited to the list L10, but may be an image, such as a web page or map data, that is different from the list L10.

### [Display control process]

In the following, with reference to FIG. 10, a description is given of an example of the procedure of the display control process executed by the control portion 5 in the image processing apparatus 10. Here, steps S11, S12, ... represent numbers assigned to the processing procedures (steps) executed by the control portion 5. It is noted that the display control process is executed in response to a user operation performed on the operation/display portion 6 to instruct a display of the list L10.

### <Step S11>

First, in step S11, the control portion 5 displays a part of the list L10 (see FIG. 4). Here, the process of step S11 is executed by the display control portion 81 of the control portion 5.

For example, the control portion 5 generates the first screen data that represents a part of the list L10, and displays the first screen data on the display portion 61.

### <Step S12>

In step S12, the control portion 5 determines whether or not an end operation to end the display of a part of the list L10 has been performed.

For example, when a predetermined hard key 63 has been operated, the control portion 5 determines that the end operation has been performed.

Here, upon determining that the end operation has been performed (Yes side at S12), the control portion 5 ends the display control process. In addition, upon determining that the end operation has not been performed (No side at S12), the control portion 5 moves the process to step S13.

### <Step S13>

In step S13, the control portion 5 determines whether or not the touch panel 62 has detected a slide operation in the up-down direction D1.

Here, upon determining that the touch panel 62 has detected a slide operation in the up-down direction D1 (Yes side at S13), the control portion 5 moves the process to step S14. In addition, upon determining that the touch panel 62 has not detected a slide operation in the up-down direction D1 (No side at S13), the control portion 5 moves the process to step S12.

### <Step S14>

In step S14, the control portion 5 scrolls a part of the list L10 displayed on the display portion 61 in response to the slide operation detected in step S13 or step S16. Here, the process of step S14 is executed by the display control portion 81 of the control portion 5.

For example, the control portion 5 acquires information relating to the moving direction, the moving distance, and the moving speed of the object H in the slide operation detected in step S13 or S16. Subsequently, the control portion 5 scrolls, based on the acquired information, the part of the list L10 displayed on the display portion 61.

### <Step S15>

In step S15, the control portion 5 determines whether or not the scroll of the part of the list L10 has ended.

Here, upon determining that the scroll of the part of the list L10 has ended (Yes side at S15), the control portion 5 moves the process to step S12. In addition, upon determining that the scroll of the part of the list L10 has not ended (No side at S15), the control portion 5 moves the process to step S16.

### <Step S16>

In step S16, the control portion 5 determines whether or not the touch panel 62 has detected a slide operation in the up-down direction D1.

Here, upon determining that the touch panel 62 has detected a slide operation in the up-down direction D1 (Yes side at S16), the control portion 5 moves the process to step S17. In addition, upon determining that the touch panel 62 has not detected a slide operation in the up-down direction D1 (No side at S16), the control portion 5 moves the process to step S15.

### <Step S17>

In step S17, the control portion 5 determines whether or not the first slide operation has been performed twice continuously in a same direction.

Specifically, the control portion 5 determines that the first slide operation has been performed twice continuously in a same direction, in a case where the slide operation detected in step S13 or S16 is the first slide operation, and another first slide operation in the same direction as that first slide operation is detected in step S16 before a scroll by that first slide operation ends.

Here, upon determining that the first slide operation has been performed twice continuously in a same direction (Yes side at S17), the control portion 5 moves the process to step S18. In addition, upon determining that the first slide operation has not been performed twice continuously in a same direction (No side at S17), the control portion 5 moves the process to step S19.

### <Step S18>

In step S18, the control portion 5 executes a first scroll amount changing process that is described below.

### <Step S19>

In step S19, the control portion 5 determines whether or not the second slide operation has been performed twice continuously in a same direction.

Specifically, the control portion 5 determines that the second slide operation has been performed twice continuously in a same direction, in a case where the slide operation detected in step S13 or S16 is the second slide operation, and another second slide operation in the same direction as that second slide operation is detected in step S16 before a scroll by that second slide operation ends.

Here, upon determining that the second slide operation has been performed twice continuously in a same direction (Yes side at S19), the control portion 5 moves the process to step S20. In addition, upon determining that the second slide operation has not been performed twice continuously in a same direction (No side at S19), the control portion 5 moves the process to step S14. In this case, in step S14, the control portion 5 scrolls a part of the list L10 displayed on the display portion 61 in response to the slide operation detected in step S16.

### <Step S20>

In step S20, the control portion 5 executes a second scroll amount changing process that is described below.

### [First scroll amount changing process]

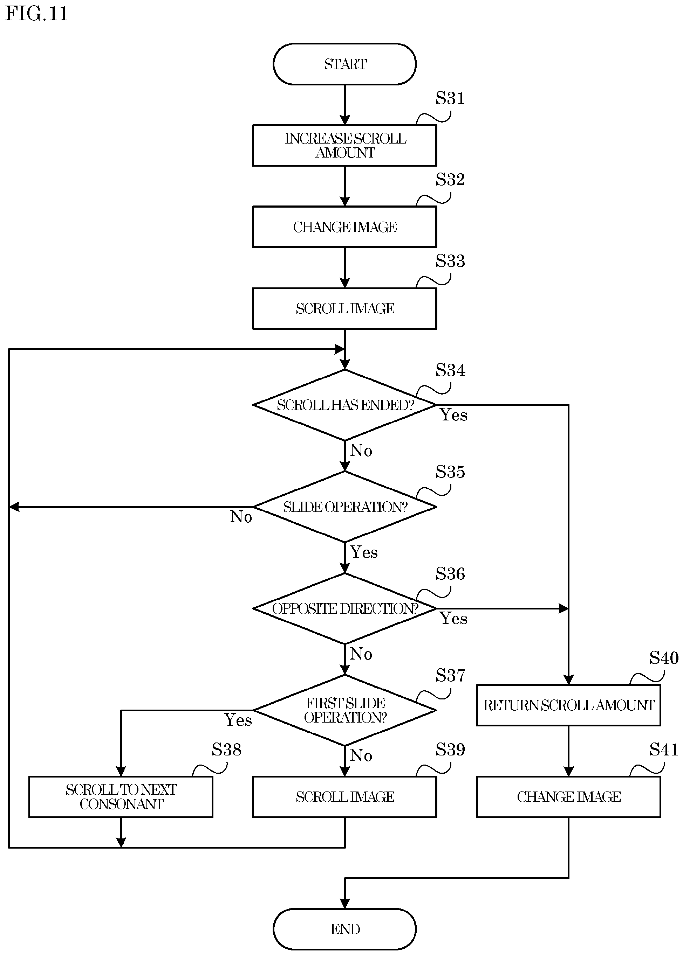

Next, with reference to FIG. 11, a description is given of an example of the procedure of the first scroll amount changing process executed in step S18 of the display control process.

### <Step S31>

First, in step S31, the control portion 5 increases the scroll amount for slide operation. Here, the process of step S31 is executed by the scroll amount control portion 82 of the control portion 5.

For example, the control portion 5 increases the scroll amount for slide operation twice.

### <Step S32>

In step S32, the control portion 5 changes the image displayed on the display portion 61 from a part of the list L10 to a part of the simple list L20 (see FIG. 7). Here, the process of step S32 is executed by the display control portion 81 of the control portion 5.

For example, the control portion 5 generates the second screen data that represents a part of the simple list L20, and displays the second screen data on the display portion 61. With the change of the image displayed on the display portion 61 from the list L10 to the simple list L20 having has less components than the list L10, the processing load of the CPU 51 functioning as the display control portion 81 is reduced.

### <Step S33>

In step S33, the control portion 5 scrolls a part of the simple list L20 displayed on the display portion 61 in response to the first slide operation detected in step S16 of the display control process. Here, the process of step S33 is executed by the display control portion 81 of the control portion 5.

### <Step S34>

In step S34, the control portion 5 determines whether or not the scroll of the part of the simple list L20 has ended.

Here, upon determining that the scroll of the part of the simple list L20 has ended (Yes side at S34), the control portion 5 moves the process to step S40. In addition, upon determining that the scroll of the part of the simple list L20 has not ended (No side at S34), the control portion 5 moves the process to step S35.

### <Step S35>

In step S35, the control portion 5 determines whether or not the touch panel 62 has detected a slide operation in the up-down direction D1.

Here, upon determining that the touch panel 62 has detected a slide operation in the up-down direction D1 (Yes side at S35), the control portion 5 moves the process to step S36. In addition, upon determining that the touch panel 62 has not detected a slide operation in the up-down direction D1 (No side at S35), the control portion 5 moves the process to step S34.

### <Step S36>

In step S36, the control portion 5 determines whether or not the direction of the slide operation detected in step S35 is opposite to the direction in which the image is scrolled in step S33.

Here, upon determining that the direction of the slide operation detected in step S35 is opposite to the direction in which the image is scrolled in step S33 (Yes side at S36), the control portion 5 moves the process to step S40. In addition, upon determining that the direction of the slide operation detected in step S35 is not opposite to the direction in which the image is scrolled in step S33 (No side at S36), the control portion 5 moves the process to step S37.

### <Step S37>

In step S37, the control portion 5 determines whether or not the slide operation detected in step S35 is the first slide operation.

Here, upon determining that the slide operation detected in step S35 is the first slide operation (Yes side at S37), the control portion 5 moves the process to step S38. In addition, upon determining that the slide operation detected in step S35 is not the first slide operation (No side at S37), the control portion 5 moves the process to step S39.

### <Step S38>

In step S38, the control portion 5 scrolls the image displayed on the display portion 61 until a piece of second item information X12 whose initial includes a consonant that follows a consonant of the initial of the currently displayed piece of second item information X12 in the order of the Japanese syllabary, is displayed. Here, the process of step S38 is executed by the display control portion 81 of the control portion 5.

This makes it possible to change the consonant of the second item information X12 displayed on the display portion 61 to the next consonant in the order of the Japanese syllabary. This makes it possible to quickly find a part of the simple address information X20 including a piece of second item information X12 that is the search target. It is noted that in step S38, the control portion 5 may scroll the image displayed on the display portion 61 until a piece of second item information X12 whose initial includes a consonant that precedes a consonant of the initial of the currently displayed piece of second item information X12 in the order of the Japanese syllabary, is displayed.

### <Step S39>

In step S39, the control portion 5 scrolls a part of the simple list L20 displayed on the display portion 61 in response to the slide operation detected in step S35. Here, the process of step S39 is executed by the display control portion 81 of the control portion 5.

### <Step S40>

In step S40, the control portion 5 returns the scroll amount for slide operation to the original amount. Here, the process of step S40 is executed by the scroll amount control portion 82 of the control portion 5.

### <Step S41>

In step S41, the control portion 5 changes the image displayed on the display portion 61 from a part of the simple list L20 to a part of the list L10. Here, the process of step S41 is executed by the display control portion 81 of the control portion 5.

### [Second scroll amount changing process]

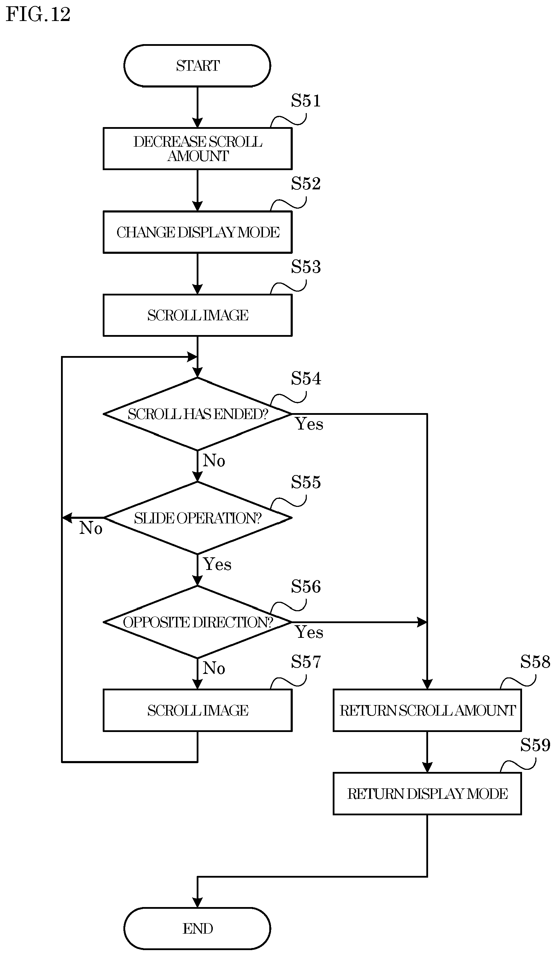

Next, with reference to FIG. 12, a description is given of an example of the procedure of the second scroll amount changing process executed in step S20 of the display control process.

### <Step S51>

First, in step S51, the control portion 5 decreases the scroll amount for slide operation. Here, the process of step S51 is executed by the scroll amount control portion 82 of the control portion 5.

For example, the control portion 5 decreases the scroll amount for slide operation to half.

### <Step S52>

In step S52, the control portion 5 changes the display mode of the list L10 displayed on the display portion 61. Here, the process of step S52 is executed by the display control portion 81 of the control portion 5.

Specifically, the control portion 5 expands the display size of the part of the list L10. For example, the control portion 5 expands the display size of the part of the list L10 by a predetermined expansion ratio. In addition, the control portion 5 highlights a plurality of pieces of information that have the same content in the list L10. For example, the control portion 5 changes the display color of the plurality of pieces of information having the same content in the list L10 to a predetermined color. This makes it easy for the user to search for a desired piece of registered address information X10.

### <Step S53>

In step S53, the control portion 5 scrolls a part of the list L10 displayed on the display portion 61 in response to the first slide operation detected in step S16 of the display control process. Here, the process of step S53 is executed by the display control portion 81 of the control portion 5.

### <Step S54>

In step S54, the control portion 5 determines whether or not the scroll of the part of the list L10 has ended.

Here, upon determining that the scroll of the part of the list L10 has ended (Yes side at S54), the control portion 5 moves the process to step S58. In addition, upon determining that the scroll of the part of the list L10 has not ended (No side at S54), the control portion 5 moves the process to step S55.

### <Step S55>

In step S55, the control portion 5 determines whether or not the touch panel 62 has detected a slide operation in the up-down direction D1.

Here, upon determining that the touch panel 62 has detected a slide operation in the up-down direction D1 (Yes side at S55), the control portion 5 moves the process to step S56. In addition, upon determining that the touch panel 62 has not detected a slide operation in the up-down direction D1 (No side at S55), the control portion 5 moves the process to step S54.

### <Step S56>

In step S56, the control portion 5 determines whether or not the direction of the slide operation detected in step S55 is opposite to the direction in which the image is scrolled in step S53.

Here, upon determining that the direction of the slide operation detected in step S55 is opposite to the direction in which the image is scrolled in step S53 (Yes side at S56), the control portion 5 moves the process to step S58. In addition, upon determining that the direction of the slide operation detected in step S55 is not opposite to the direction in which the image is scrolled in step S53 (No side at S56), the control portion 5 moves the process to step S57.

### <Step S57>

In step S57, the control portion 5 scrolls a part of the list L10 displayed on the display portion 61 in response to the slide operation detected in step S55. Here, the process of step S57 is executed by the display control portion 81 of the control portion 5.

### <Step S58>

In step S58, the control portion 5 returns the scroll amount for slide operation to the original amount. Here, the process of step S58 is executed by the scroll amount control portion 82 of the control portion 5.

### <Step S59>

In step S59, the control portion 5 returns the display mode of the list L10 displayed on the display portion 61 to the one before the change in step S52.

As described above, in the display control process, when the first slide operation or the second slide operation has been performed by a predetermined number of times continuously in a same direction, the scroll amount for slide operation is changed. As a result, it is possible to prevent the scroll amount for slide operation from being changed in a manner not intended by the user.

In addition, in the display control process, when the first slide operation for which the image is scrolled by an amount that is higher than the upper limit value has been performed by the predetermined number of times continuously in a same direction, the scroll amount for slide operation is increased, and when the second slide operation for which the image is scrolled by an amount that is equal to or lower than the lower limit value has been performed by the predetermined number of times continuously in a same direction, the scroll amount for slide operation is decreased. With this configuration, the user can grasp intuitively how to change the scroll amount for slide operation.

It is to be understood that the embodiments herein are illustrative and not restrictive, since the scope of the disclosure is defined by the appended claims rather than by the description preceding them, and all changes that fall within metes and bounds of the claims, or equivalence of such metes and bounds thereof are therefore intended to be embraced by the claims.

## Claims

1. An operation input device comprising:
a display portion (61);
a display control portion (81) configured to scroll an image displayed on the display portion (61) in response to a slide operation performed on a display surface of the display portion (61); and
a scroll amount control portion (82) configured to change a scroll amount for slide operation when a first slide operation has been performed by a predetermined number of times continuously in a same direction, the first slide operation being a slide operation for which the image is scrolled by an amount that is higher than a predetermined upper limit value or equal to or lower than a predetermined lower limit value.

2. The operation input device according to claim 1, wherein
the first slide operation is an operation for which the image is scrolled by an amount that is higher than the upper limit value, and
when the first slide operation has been performed by the predetermined number of times continuously in the same direction, the scroll amount control portion (82) increases the scroll amount for slide operation.

3. The operation input device according to claim 1, wherein
the first slide operation is an operation for which the image is scrolled by an amount that is equal to or lower than the lower limit value, and
when the first slide operation has been performed by the predetermined number of times continuously in the same direction, the scroll amount control portion (82) decreases the scroll amount for slide operation.

4. The operation input device according to claim 2, wherein
the scroll amount control portion (82) decreases the scroll amount for slide operation when a second slide operation has been performed by the predetermined number of times continuously in the same direction, the second slide operation being a slide operation for which the image is scrolled by an amount that is equal to or lower than the lower limit value, and
the lower limit value is equal to or lower than the upper limit value.

5. The operation input device according to claim 4, wherein
when the scroll amount for slide operation has been decreased, the display control portion (81) expands a display size of the image.

6. The operation input device according to claim 4 or 5, wherein
the display control portion (81) displays a part of a list on the display portion (61), and when the scroll amount for slide operation has been increased, the display control portion (81) changes the image displayed on the display portion (61) from the part of the list to a part of a simple list that is a simplified version of the list.

7. The operation input device according to any one of claims 4 to 6, wherein
the display control portion (81) displays a part of a list on the display portion (61), and when the scroll amount for slide operation has been decreased, the display control portion (81) highlights a plurality of pieces of information that have a same content in the list

8. The operation input device according to any one of claims 1 to 7, wherein
in a case where a predetermined specific condition is satisfied after the scroll amount for slide operation has been changed, the scroll amount control portion (82) returns the scroll amount for slide operation to an original amount.

9. An image processing apparatus (10) comprising:
the operation input device according to any one of claims 1 to 8; and
either or both of:
an image reading portion (2) configured to read image data from a document sheet; and
an image forming portion (3) configured to form an image based on image data.

10. An operation input method executed in an operation input device that includes a display portion (61), the operation input method comprising:
scrolling an image displayed on the display portion (61) in response to a slide operation performed on a display surface of the display portion (61); and
changing a scroll amount for slide operation when a first slide operation has been performed by a predetermined number of times continuously in a same direction, the first slide operation being a slide operation for which the image is scrolled by an amount that is higher than a predetermined upper limit value or equal to or lower than a predetermined lower limit value.
